# EUROPEAN PATENT SPECIFICATION

(11) **EP 3 426 720 B1**
(45) Date of publication and mention of the grant of the patent: **29.01.2020**
(21) Application number: 17707359.0
(22) Date of filing: 02.03.2017
(51) Int. Cl.: C08J 3/12, C08J 3/20, E01C 13/08, B01J 2/00

(54) **ARTIFICIAL TURF INFILL AND METHOD FOR MAKING IT**
KUNSTRASENFÜLLUNG UND HERSTELLUNGSVERFAHREN
REMPLISSAGE DE GAZON ARTIFICIEL ET PROCÉDÉ DE FABRICATION

(30) Priority: 11.03.2016 EP 16159975
(43) Date of publication of application: 16.01.2019
(73) Proprietor: Polytex Sportbeläge Produktions-GmbH, 47929 Grefrath (DE); Unirubber Sp.z.o.o., 59-940 Wegliniec (PL)
(72) Inventor: SICK, Stephan, 47877 Willich (DE); FINDER, Zdenka, 86701 Rohrenfels (DE); OWCZAREK-RYMAROWICZ, Izabela, 58-570 Jelenia Góra (PL)
(74) Representative: Richardt Patentanwälte PartG mbB
(86) International application number: PCT/EP2017/054964
(87) International publication number: WO 2017/153261

(56) References cited:
- EP-A2- 1 201 388
- EP-B1- 1 416 009
- WO-A1-2010/081632
- WO-A2-2004/080709
- DE-U1- 20 317 731

## Description

### Field of the invention

The invention relates to artificial turf and methods for the manufacture of artificial turf infill.

### Background and related art

Artificial turf or artificial grass is surface that is made up of fibers which is used to replace grass. The structure of the artificial turf is designed such that the artificial turf has an appearance which resembles grass. Typically artificial turf is used as a surface for sports such as soccer, American football, rugby, tennis, golf, for playing fields, or exercise fields. Furthermore artificial turf is frequently used for landscaping applications.

Artificial turf may be manufactured using techniques for manufacturing carpets. For example artificial turf fibers which have the appearance of grass blades may be tufted or attached to a backing. Often times artificial turf infill is placed between the artificial turf fibers. Artificial turf infill is a granular material that covers the bottom portion of the artificial turf fibers. The use of artificial turf infill may have a number of advantages. For example, artificial turf infill may help the artificial turf fibers stand up straight. Artificial turf infill may also absorb impact from walking or running and provide an experience similar to being on real turf. The artificial turf infill may also help to keep the artificial turf carpet flat and in place by weighting it down.

European patent application EP 1 416 009 B1 describes a loose, free flowing rubber particles as litter material for artificial turf. The particles have an average size between 0.4 mm and 4.0 mm and their complete surface is covered with a permanently elastic and pigmenting coating.

European patent application EP1201388 B1 discloses a method of manufacturing colored rubber chips: To 100 parts by weight of crushued rubber chips having a particle size of from 1 to 10 mm or fibrous rubber chips having a fibrous length of 30 mm or below are added a film forming material, which contains a pigment and 10 to 100 parts by weight of a one-pack type or two-pack type polyurethane resin which gels at least from a liquid state in 60 seconds or more and cures through the gelling process, and they are stirred for mixing. When the polyurethane resin starts to gel and the rubber chips start to aggregate, stirring is further continued for mixing in spite of heavy load on the mixer so to loosen the aggregation of the rubber chips. By configuring as described above, A manufacturing method which can form a thick colored film without requiring a complex procedure and can inexpensively obtain colored rubber chips which have a remarkable color keeping property and a pyramid shape with edges similar to those formed when crushed is provided. The particle size is desired to have almost the same size as the thickness of the film. And if it is excessively larger or smaller than that size it does not meet the objective of completely covering the rubber chips. The film thickness in the present invention is about 0.8 mm maximum and the particle sizes is also about the same accordingly.

International patent application WO 2010/081632 A1 discloses a method for producing coated particles made of rubber granulate, the coating, the particles coated with said coating, and the uses of the coated particles. The coating contains no solvents.

### Summary

The invention provides for a method of manufacturing artificial turf infill, a method of manufacturing artificial turf, artificial turf infill, and artificial turf. Embodiments are given in the dependent claims.

In one aspect the invention provides for a method of manufacturing artificial turf infill. Artificial turf infill as used herein, encompasses a granular material that is spread out on an artificial turf carpet in between the fibers. Artificial turf infill may be used to modify an artificial turf carpet to have more earth like properties. For example the artificial turf infill may provide a surface which is able to absorb impacts in a manner similar to real turf.

The method comprises providing an initial composition comprising a granulate, at least one first type of pigment, and a fluid binding agent. The fluid binding agent comprises at least one type of polymer component. The method further comprises mixing the initial composition. The method further comprises adding water and a catalyst to the initial composition during the mixing of the initial composition to cure the fluid binding agent and the at least one type of pigment into an initial coating of the granulate.

The method further comprises providing a subsequent composition comprising the granulate with the initial coating, the at least one second type of pigment and the fluid binding agent. The method further comprises mixing the subsequent composition. The method further comprises adding water and the catalyst to the subsequent composition during the mixing of the subsequent composition to cure the fluid binding agent and the at least one type of pigment into a subsequent coating of the granulate.

The at least one second type of pigment and the at least one first type of pigment may be identical or they may be different. If they are the same then the coating of the granulate will be of a uniform color. If the at least one second type of pigment and the at least one first type of pigments are different colors then the two colors can be chosen so that the resulting artificial turf infill has a more natural and earth like appearance.

The method further comprises providing the granulate with the subsequent coating as artificial turf infill.

The coating of the granulate in at least two steps as described above, may be beneficial because it may provide for better coating of the granulate For example, during the mixing of the initial composition individual grains of the granulate will touch and interact with each other as the initial coating on each of the grains forms. The physical contact between different grains will however cause defects. By coating the granulate particles a second time with the subsequent coating, much higher coverage of the granulate can be achieved.

As a hypothetical example, during the formation of the initial coating or the subsequent coating the coverage is each only 90% of the surface of the granulate. After the initial coating has been deposited, roughly 10% of each granule of the granulate would be uncoated. There would be small surface defects. Deposition of the subsequent coating would then also cover 90% of the surface. As the interaction between the grains or particles of the granulate is essentially a random process, one can expect that 90% of the defects that were exposed after the deposition of the initial coating are coated in this case. The result of doing two coatings is then an artificial turf infill that is 99% coated with only minor amounts of defects, where the granulate is not coated with either the initial coating or the subsequent coating.

Improving the coverage of the granulate may be beneficial in several different situations. For example, it may be desirable to color the artificial turf infill the same or a similar color as fibers or tufts, which are used to manufacture an artificial turf carpet. This may provide a more realistic-looking play surface or playfield. Another advantage is that the elastomeric granulate may be better coated and may therefore have superior wear qualities or may even be better isolated from the environment.

In an embodiment, the granulate comprises an elastomeric or elastic granulate.

In different embodiments the granulate is an elastomeric material based on elastomers like synthetic rubbers as e.g. styrene butadiene rubber, polybutadiene rubber, styrene- ethylene-butadiene-styrene copolymer (SEBS), ethylenepropylene-diene monomer rubber (EPDM), acryl nitrile butadiene rubber. In other embodiments a cis- 1,4 -polyisoprene, as natural rubber and trans 1,4 - polyisoprene as gutta-percha based granulate can be used.

In another embodiment the granulate comprises a compression resistant granulate or a rigid granulate.

In another embodiment the granulate comprises any one of the following: natural latex, cork, linoleum, composites made from solidified vegetable oils and wood flour or a hydrogel of methyl-cellulose.

In another embodiment the curing of the initial coating and the curing of the subsequent coating is a polymerization process. Within the claims, the term 'cure' or 'curing' may be replaced with polymerization.

In another embodiment the subsequent coating at least partially covers the initial coating.

In another embodiment the initial coating only partially covers the granulate.

In another embodiment the subsequent coating only partially covers the initial coating.

In another embodiment, the initial coating and the subsequent coating each have a thickness of less than any one of the following: 0.1 mm, 0.075 mm, 0.05 mm, and 0.01 mm. This embodiment may be beneficial because it may provide a means of reducing the amount of fluid binding agent necessary to coating the granulate.

The initial coating comprises gaps. The subsequent coating also comprises gaps. The gaps in the initial and subsequent coatings may be distributed randomly on the surface of the granulate. As the gaps in both coatings are distributed randomly, it is unlikely that the gaps will line up. The result will be that there will be few if any portions of the underlying granulate exposed.

It is possible that some of the gaps in the intial and subsequent coatings may line up. However, all or the vast majority of the surface of the granulate will be coated. Using the double coating may greatly reduce the amount of fluid binding agent necessary to coat the granulate.

In another embodiment, the granulate with the initial coating and the subsequent coating is re-coated at least one time by performing the following sequence. The first step in the sequence is provide a subsequent composition by adding at least one additive and the fluid binding agent to the granulate that has already been coated with the initial coating and the subsequent coating. The next step in the sequence is to mix the subsequent composition. The next step in the sequence is to add water and the catalyst to the subsequent composition during the mixing of the subsequent composition to cure the fluid binding agent and the at least one additive into a further coating. The granulate with the further coating is provided then as the artificial turf infill. This embodiment may be beneficial because an additional coating or layer may be put on the granulate. If the at least one first and/or second type of pigment is used again then the granulate may be coated a third or more times to improve the coverage and the coating of the granulate. This embodiment may also be beneficial because it may enable the deposition of so-called functional layers or additives, which may add to the utility or wear or usefulness of the artificial turf infill.

In another embodiment, the further coating has a thickness of less than any one of the following: 0.1 mm, 0.075 mm, 0.05 mm, and 0.01 mm. This embodiment may be beneficial because it may provide a means of reducing the amount of fluid binding agent necessary for coating the granulate.

In another embodiment the PU catalyst is partially or completely water soluble and is of the group: secondary amine, tertiary amine, a metal organo cytalyst.

In another embodiment the liquid PU component is based on an NCO terminal polymer which might be a pre-polymer, a polymeric isocyanate, an oligomeric isocyanate , a monomer and a mixture hereof.

In another embodiment the liquid PU component is based on an aromatic diisocyanate of the group toluene diisocyanate or methylene- 2,2 -diisocyanate,

In another embodiment the liquid PU component is based on an aliphatic diisocyanate of the group hexamethylene disiocyanate, isophorone diisocyanate and 1,4-cyclohexyldisiocyanate.

In preferred embodiment the liquid PU component is based on methylenediphenyl-isocyanate isomer mixture.

In another embodiment the hydroxyl component for the production of the PU is out of the group polyether polyol or polyester polyol.

In another embodiment the hydroxyl component is based on a polyetherpolyol of the molecular weight 500 to 10000. In a preferred embodiment the polyetherpolyol has a molecular weight of 1500- 6000. In a very preferred embodiment the molecular weight is in the range of 2000- 4000.

In another embodiment the at least one additive comprises the at least one first and/or second type of pigment.

In another embodiment the at least one additive further comprises a flame retardant like aluminum trihydrate, magnesium hydroxide turning a by itself burnable or flammable elastomeric material into a flame retardant infill material.

In another embodiment this flame retardant additives creates an intumescent coating and is based on intumescent component comprising ammonium polyphosphate or exfoliated graphite or a mixture hereof.

In another embodiment the at least one additive further comprises zeolite. The addition of zeolite may be beneficial because then the surface of the artificial turf infill may be able to absorb or de-absorb water. For example before a football game, which is scheduled to be held in the sun or in hot conditions, water may be sprayed onto the artificial turf and the zeolite may absorb an amount of water. As the sun or hot air heats the artificial turf infill during the game, the evaporation of water may cool the playing surface for the players and make the use of the artificial turf more pleasant.

In another embodiment the at least one additive further comprises methylcellulose, which may be beneficial in a similar way like zeolite for absorbing and desorbing of water, rendering a cooling effect at hot climatic conditions.

In another embodiment the at least one additive further comprises an antibacterial agent.

In another embodiment the at least one additive further comprises silver. Silver may be beneficial as an antibacterial agent.

In another embodiment the at least one additive further comprises chitosan, showing natural antibacterial properties.

In another embodiment the at least one additive further comprises an IR reflective pigment. The use of the IR reflective pigments as mixed metal oxides may be beneficial because it may reflect infrared light. This may reduce the heating of the artificial turf infill. A specific advantage may be that in this case the comparably expensive and precious pigments are merely on the surface of the infill granulates, where they are fully effective and not in the complete core of the elastic material In another embodiment the elastomeric granulate is a rubber granulate.

In another embodiment the elastomeric granulate comprises any one of the following: rubber, an elastomeric polymer, Metallocene Butadiene Rubber, nitrile rubber granulate, natural rubber granulate, styrene-butadiene rubber granulate, ethylene propylene diene monomer rubber granulate, black crumb rubber granulate, acrylonitrile butadiene rubber, a thermoplastic polymer, Styrene Ethylene Butylene Styrene , Styrene Block Copolymers, and combinations thereof.

In a further embodiment the granulate is an elastic foam.

In a further embodiment the granulate is an elastic PU foam.

In another embodiment the granulate has an average diameter between 0.1 mm and 3.0 mm.

In another embodiment the granulate has a maximum diameter of less than 5.0 mm.

In another embodiment the at least one first and/or second type of pigment comprises an inorganic pigment, an organic pigment or mixtures hereof.

In another embodiment the at least one first and/or second type of pigment comprises any one of the following: iron oxide, iron oxide hydroxide, chromium(III) oxide, a copper phythalocyanine pigment, a nickel azopigment, titanium oxide and combinations thereof.

In another embodiment the at least one type of additive is hindered amine light stabilizer (HALS) which is able to protect the PU coating as well as the elastic and/ or compression resilient granulate against UV degradation.

In another embodiment the at least one type of additive is a thermostabilizing agent, protecting the elastic and/ or compression resilient granulate against thermal degradation.

In another embodiment the at least one type of additive is an anti-freeze/ deicing additive of the group: sodium chloride, potassium chloride, calcium chloride, sodium formiate, potassium formiate or a mixture hereof. The additive is migrating into the neighborhood of the granulate and by this inhibits the formation of ice by freezing humidity between the infill granulate particles.

In another embodiment the fluid binding agent further comprises any one of the following: a surfactant, a polyurethane aliphatic isocyanate, a polyurethane aromatic isocyanate, zeolite, an antibacterial agent, silver, IR reflective pigment, and combinations thereof.

In another embodiment the polymer component comprises any one of the following: at least one type of monomer, at least one type of partially polymerized polymer, and combinations thereof.

In another embodiment the polymer component is cured into at least one type of polyurethane by the water and the catalyst.

For example the polymer component could be methylene diphenyl diisocyanate. The polymer component could also comprise polyols.

In another embodiment the catalyst comprises any one of the following: an amine catalyst and a metal organic catalyst.

In another embodiment the method further comprises drying the subsequent composition before providing the granulate as the artificial turf infill.

It may also be possible to dry the initial composition after coating the granulate with the initial coating; however, it is not necessary. The water, which is leftover from the formation of the initial coating on the elastic and /or compression resilient granulate may be used in the reaction of the subsequent composition.

In another embodiment the method is at least partially performed in a flow reactor. In the flow reactor the granulate is slowly moved along a linear sequential path, where the granulates are generally mixed and moved along. The benefit of using a flow reactor is that the artificial turf infill may be produced on a continuous basis.

In another embodiment the method is at least partially performed as a batch process. The initial coating is formed on the granulate during an initial batch and the subsequent coating is formed on the granulate during a subsequent batch. Forming the initial coating and the subsequent coating in separate batches may be beneficial because it may enable precise control over the formation of the initial and subsequent coatings.

In another aspect the invention provides for a method of manufacturing artificial turf. The method comprises installing an artificial turf carpet. The artificial turf carpet comprises multiple artificial turf fiber tufts. For example, the artificial turf carpet may be a tufted artificial turf carpet. There may be a backing which has tufts of artificial grass fibers tufted into it. The method further comprises providing the artificial turf by spreading a layer of artificial turf infill between the multiple artificial turf fiber tufts. The artificial turf infill comprises a granulate. The granulate comprises at least two outer coatings. Each of the two outer coatings comprises at least one first and/or second type of pigment and a binding agent. The binding agent comprises at least one type of polyurethane polymer. This method may be beneficial because the artificial turf infill may be more completely covered with the two outer coatings. This may for instance provide superior optical appearance of the artificial turf infill. It may also provide better wear and longevity of the artificial turf infill.

In another embodiment, the two outer coatings each have a thickness of less than any one of the following: 0.1 mm, 0.075 mm, 0.05 mm, and 0.01 mm. This embodiment may be beneficial because it may provide a means of reducing the amount of fluid binding agent necessary for coating the granulate.

In another embodiment, the at least two outer coatings each comprise gaps. In other words the at least two outer coatings each incompletely covers the granulate and each of the two outer coatings has gaps.

The gaps in the at least two outer coatings may be distributed randomly on the surface of the granulate. Some of the gaps in the at lesat two outer coatings may line up. However, many of the gaps in the at least two outer coatings will be at different locations on the surface of the granulate. The result is that there will likely be a few places where the underlying granulate is exposed. However the majority of the surface of the granulate will be coated. Using the double coating may greatly reduce the amount of fluid biniding agent necessary to coat the granulate.

In another embodiment the method further comprises manufacturing the artificial turf infill according to an embodiment.

In another embodiment the granulate comprises at least two outer coatings. Each of the two outer coatings comprises at least one first and/or second type of pigment and a binding agent. The binding agent comprises at least one type of polyurethane polymer. This artificial turf infill may have the benefit that the use of the two outer coatings enables more complete coverage of the grains or particles of the artificial turf infill.

In another aspect, the invention provides for an artificial turf. The artificial turf comprises an artificial turf carpet. The artificial turf carpet comprises multiple artificial turf fiber tufts. The artificial turf further comprises artificial turf infills spread between the multiple artificial fiber tufts. The artificial turf infill comprises a granulate. The granulate comprises at least two outer coatings. Each of the two outer coatings comprises at least one first and/or second type of pigment and a binding agent. The binding agent comprises at least one type of polyurethane polymer.

The use of the artificial turf infill with the two outer coatings may provide superior wear or longevity of the artificial turf. It may also provide superior optical appearance as the artificial turf infill may be more uniformly pigmented if the pigments in the two layers are identical. The pigments can also be selected so that the artificial turf infill has a patch work of different colors. This may make the artificial turf infill look more natural and earth-like.

In another embodiment, the two outer coatings each have a thickness of less than any one of the following: 0.1 mm, 0.075 mm, 0.05 mm, and 0.01 mm. This embodiment may be beneficial because it may provide a means of reducing the amount of fluid binding agent necessary to coating the granulate.

In another embodiment, the at least two outer coatings each comprise gaps. In other words the at least two outer coatings each incompletely covers the granulate and each of the two outer coatings has gaps.

The gaps in the at least two outer coatings may be distributed randomly on the surface of the granulate. Some of the gaps in the at lesat two outer coatings may line up. However, many of the gaps in the at least two outer coatings will be at different locations on the surface of the granulate. The result is that there will likely be a few places where the underlying granulate is exposed. However the majority of the surface of the granulate will be coated. Using the double coating may greatly reduce the amount of fluid biniding agent necessary to coat the granulate.

In another embodiment the granulate has an average diameter between 0.45 mm and 2.0 mm.

In another embodiment the granulate has a maximum diameter of less than 4 mm.

In another embodiment, the artificial turf fiber tufts are arranged in rows. The artificial turf fibers have a row of space in between 0.5 cm and 1.95 cm. This corresponds approximately to 3/8" to 3/4".

In another embodiment the artificial turf covering has a pile height between 2.5 cm and 7.5 cm. The pile height is the length of the artificial turf fibers above the backing or base of the artificial turf carpet.

It is understood that one or more of the aforementioned embodiments of the invention may be combined as long as the combined embodiments are not mutually exclusive.

### Brief description of the drawings

In the following embodiments of the invention are explained in greater detail, by way of example only, making reference to the drawings in which:
- Fig. 1: illustrates a cross sectional coating of a grain of a granulate;
- Fig. 2: illustrates the granule of Fig. 1 after being partially coated with an initial coating;
- Fig. 3: illustrates the granule of Fig. 2 after being partially coated with a subsequent coating;
- Fig. 4: illustrates the granule of Fig. 3 after being partially coated with a subsequent coating;
- Fig. 5: illustrates an example of an artificial turf carpet;
- Fig. 6: illustrates an example of artificial turf;
- Fig. 7: shows a flow chart which illustrates a method of manufacturing artificial turf infill;
- Fig. 8: shows a flow chart which illustrates a further method of manufacturing artificial turf infill;
- Fig. 9: shows a flow chart which illustrates a method of manufacturing artificial turf;
- Fig. 10: illustrates an example of a batch reactor; and
- Fig. 11: illustrates an example of a flow reactor.

### Detailed Description

Like numbered elements in these figures are either equivalent elements or perform the same function. Elements which have been discussed previously will not necessarily be discussed in later figures if the function is equivalent.

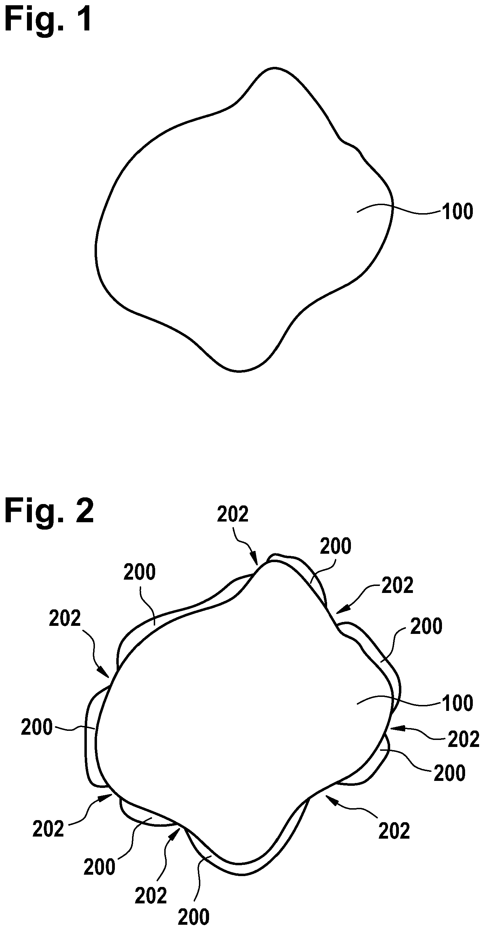

Figs. 1-4 illustrate the manufacture of artificial turf infill by examining a single grain or granule 100. The granule 100 could for example be made from an elastomeric compound, a rigid compound, a semi-rigid compound, and/or a compression resilient compound. Fig. 1 shows a grain or granule. For example the grain 100 could be a grain or granule of rubber or a compression, a rigid compound, a semi-rigid compound, or resilient compound. The view shown in Figs. 1-4 is a cross-sectional view.

Fig. 2 shows the same grain 100 or granule after it has been coated with an initial coating 200. The initial coating 200 was formed by providing an initial composition of a granulate, which is made up of a large number of grains or granules 100. The initial composition comprised at least one first type of pigment and a fluid binding agent also. The fluid binding agent comprises at least one type of polymer component. The initial composition was then mixed. Next, water and a catalyst were added to the initial composition during the mixing process to cure the fluid binding agent and the at least one first type of pigment into the initial coating 200. As a large number of these granules 100 or grains are mixed they interact with each other and bump into each other occasionally during the process. For this reason there may be holes or defects in the initial coating 200. In Fig. 2 it can be seen that there are a number of gaps 202 in the initial coating 200. These are regions where the grain 100 or granule is coated or is insufficiently coated by the initial coating 200.

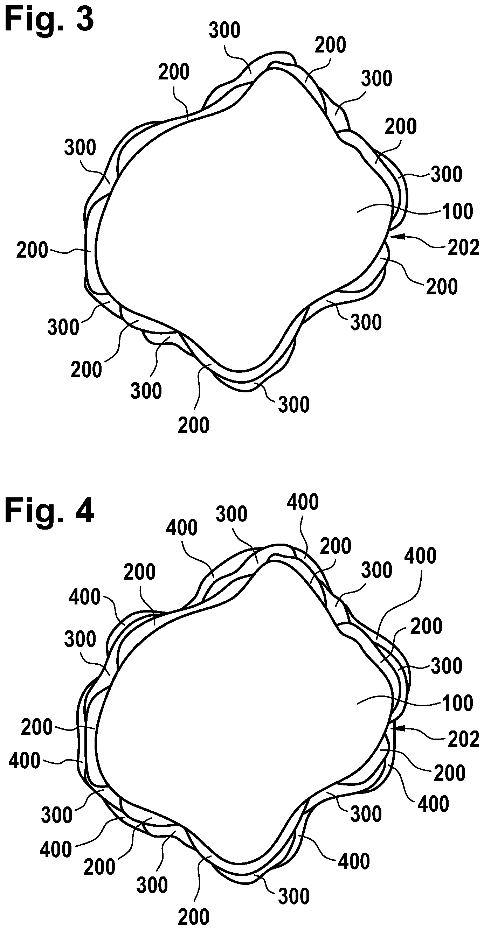

Fig. 3 shows the same grain 100 or granule after it has been coated with a subsequent coating 300. As with the initial coating 200 the subsequent coating 300 does not completely cover all portions of the grain 100 or granule. However, due to the two-step process almost the entire grain 100 or granule 100 is coated. In this example there can only be seen one gap 202. The subsequent coating 300 was formed by providing a subsequent composition comprising the granulate with the initial coating as is shown in Fig. 2 and then combining it with the at least one first type of pigment or at least one second type of pigment and the fluid binding agent. This subsequent composition was then mixed. During the mixing process additional water and a catalyst were added to the subsequent composition to cure the fluid binding agent and the at least one type of pigment into the subsequent coating 300. Fig. 3 illustrates how a two-step coating process may be used to improve the coverage or quality of the coating on a granule that makes up a larger granulate. Granules manufactured, such as is shown in Fig. 3, may be provided as a group to form an artificial turf infill.

It is also possible to perform further coatings on the grain 100 or granule 100. Fig. 4 shows the grain 100 after a further coating 400 has been applied. This further coating 400 may for example be formed by recoating the granulate, which comprises the grain 100, by adding at least one additive and the fluid binding agent to the granulate. Next, a combination of the granulate and the at least one additive in the fluid binding agent form a subsequent composition. This subsequent composition is then mixed and again, water and a catalyst can be added to cure the fluid binding agent and at least one additive into the further coating 400. It can be seen now that the coverage of the grain 100 or granule is sufficient that there are no longer any gaps visible in this cross-section. The at least one additive could take different forms.

If it were desired to ensure that there are no gaps in the coatings the at least one pigment could be used again. In other cases additional additives may be added to form a functional further coating 400. For example a flame retardant such as polyurethane oliphatic isocyanates could be added. To provide for the absorption and de-absorption of water, to cool the carpet a zeolite could be added. Also various antibacterial or antifungal agents could be added too. In other examples an infrared reflection agent such as EPDM may be used to reduce the amount of heat absorbed by the artificial turf infill and/or also to help protect it from sunlight.

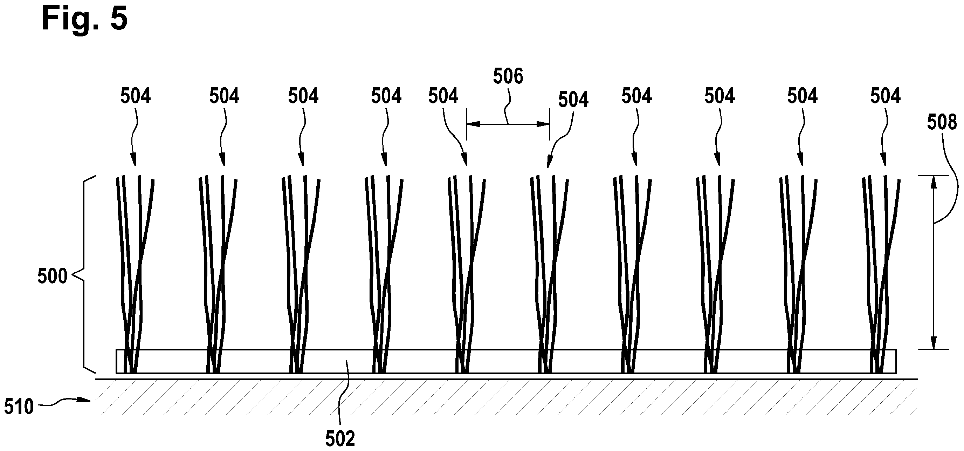

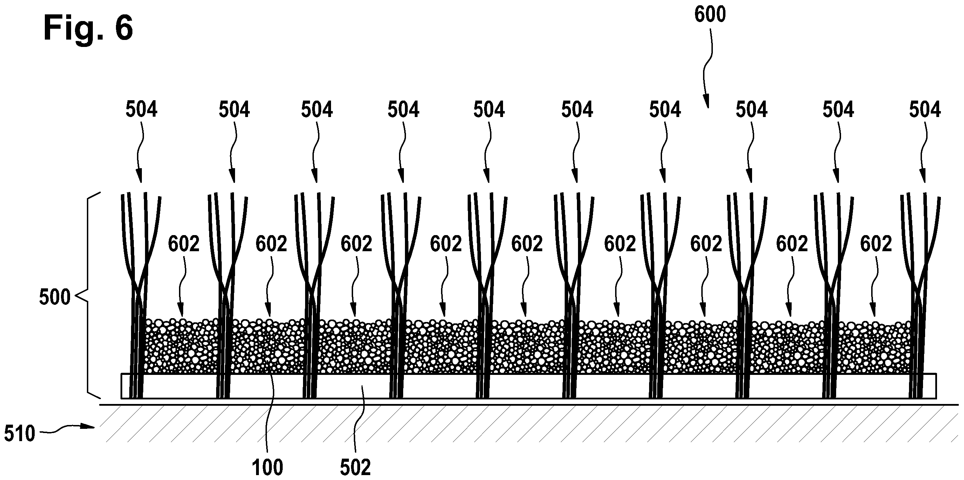

Figs. 5 and 6 illustrate the manufacture of an artificial turf using an artificial turf carpet and artificial turf infill. In Fig. 5 an artificial turf carpet 500 can be seen. The artificial turf carpet 500 comprises a backing 502. The artificial turf carpet 500 shown in Fig. 5 is a tufted artificial turf carpet in this example. The artificial turf carpet is formed by artificial turf fiber tufts 504 that are tufted into the backing 502. The artificial turf fiber tufts 504 are tufted in rows. There is row spacing 506 between adjacent rows of tufts. The artificial turf fiber tufts 504 also extent a distance above the backing 502. The distance that the fibers 504 extend above the backing 502 is the pile height 508. In Fig. 5 it can be seen that the artificial turf carpet 500 has been installed by placing or attaching it to the ground 510 or a floor. To manufacture the artificial turf the artificial turf infill made up of grains or granules such as is shown in Figs. 3 or 4 are spread out on the surface and distributed between the artificial turf fiber tufts 504. Fig. 6 shows the artificial turf carpet 500 after the artificial turf infill 602 has been spread out and distributed between the artificial turf fiber tufts 504. It can be seen that the artificial turf infill 602 is a granulate made up of individual grains 100 or granules such as is depicted in Figs. 3 or 4.

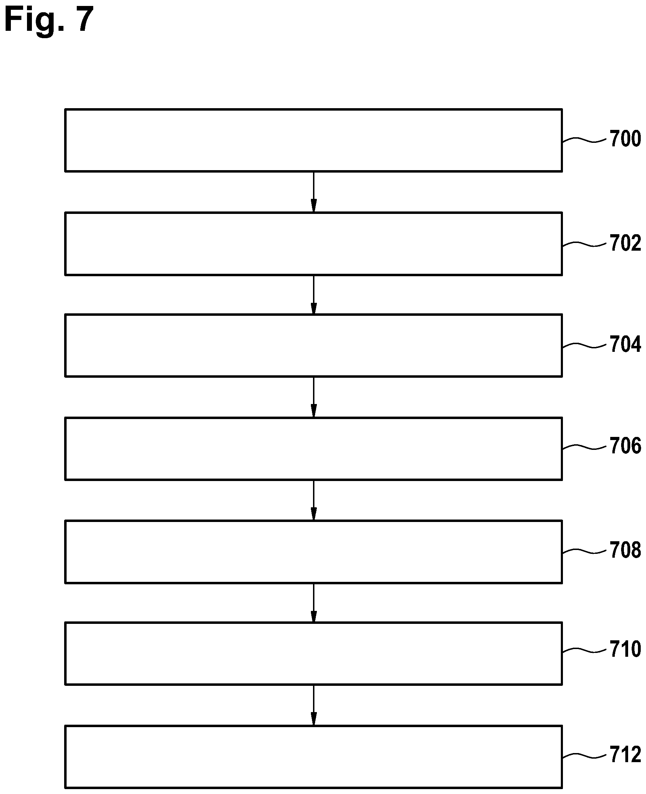

Fig. 7 shows a flowchart which illustrates a method of manufacturing artificial turf infill 602 such as is depicted in Figs. 1-3 in the coating of the single grain 100 or granule. First in step 700 an initial composition is provided. The initial composition comprises a granulate, at least one first type of pigment, and a fluid binding agent. The fluid binding agent comprises at least one type of polymer component. Next in step 702 the initial composition is mixed. Next in step 704 during the mixing water and catalyst are added to the initial composition to cure the fluid binding agent and the at least one type of pigment into an initial coating 200 of the granulate. In step 706 a subsequent composition is provided. The subsequent composition comprises the granulate with the initial coating 200, the at least one second type of pigment, and the fluid binding agent. Next in step 708 the subsequent composition is mixed. Next in step 710 water and the catalyst are added to the subsequent composition during the mixing of the subsequent composition to cure the fluid binding agent and the at least one second type of pigment into a subsequent coating 300 of the granulate. Finally in step 712 the granulate with the subsequent coating 300 is provided as the artificial turf infill 602.

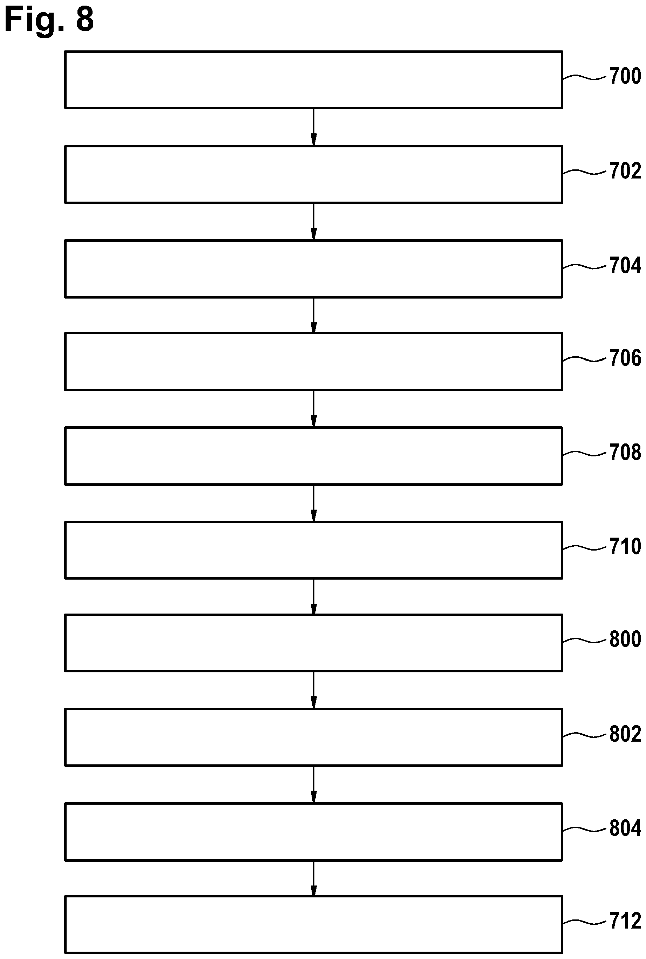

Fig. 8 shows a flowchart, which illustrates an alternate method of manufacturing artificial turf infill. The method depicted in Fig. 8 is similar to the method depicted in Fig. 7 with several additional steps. The method in Fig. 8 is identical to Fig. 7 in steps 700-710. After step 710 has been performed, step 800 is performed. Steps 802 and then 804 are performed before step 712 is performed. Steps 800, 802 and 804 are the steps of recoating the granulate after it has been coated with the subsequent coating. First in step 800 a subsequent composition is provided by adding at least one additive and a fluid binding agent to the granulate. Next in step 802, the subsequent composition is mixed. Finally, in step 804, during the mixing in step 802, water and catalyst are added to the subsequent composition during mixing of the subsequent composition to cure the fluid binding agent and at least one additive into the further coating 400. Finally, in step 712, the granulate that has been coated with the initial coating, the subsequent coating, and the further coating 400, is provided as the artificial turf infill 602.

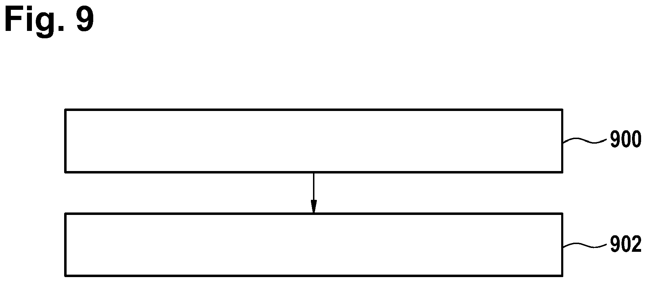

Fig. 9 shows a flowchart, which illustrates a method of manufacturing artificial turf 600 such as depicted in Fig. 6. First in step 900 an artificial turf carpet 500 is installed. The artificial turf carpet comprises multiple artificial turf fiber tufts 504. Next in step 902, the artificial turf 600 is provided by spreading a layer of artificial turf infill 602 between the multiple artificial turf fiber tufts 504. The artificial turf infill comprises the granulate. The granulate comprises at least two outer coatings 200, 300, 400. Each of the at least two outer coatings 200, 300, 400 comprises at least one type of pigment and a binding agent. The pigments in each of the coatings may be identical or different. The binding agent comprises at least one type of polyurethane polymer.

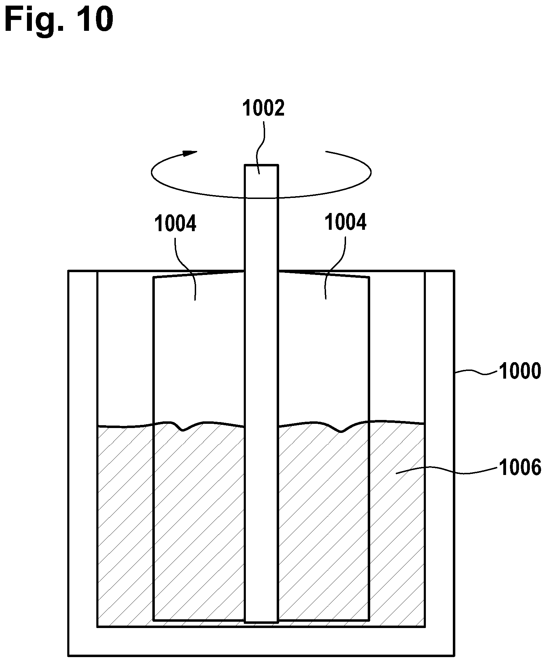

Fig. 10 illustrates some equipment which may be used for manufacturing the artificial turf infill 602 and for coating grain or granules 100, such as is illustrated in Figs. 1-4. Fig. 10 depicts a mixing vat 1000. The mixing vat has a rotatable shaft 1002 that is connected to a number of mixing paddles 1004. The mixing vat 1000 is filled with the granulate 1006. The elastomeric granulate can then be manufactured into artificial turf infill by following the methods illustrated in Figs. 7 or 8. Since water is added with the catalyst for forming each of the initial coating 200, the subsequent coating 300 or the further coating 400 it is not necessary to dry the granulate 1006 between the coating of each of the coatings. The granulate 1006 can be added to the mixing vat 1000 and then at different times the different materials can be added while the rotatable shaft 1002 is turned.

The apparatus depicted in Fig. 10 may be used for manufacturing the artificial turf infill as batches. It is also possible to manufacture the artificial turf infill as a continuous process using a flow reactor.

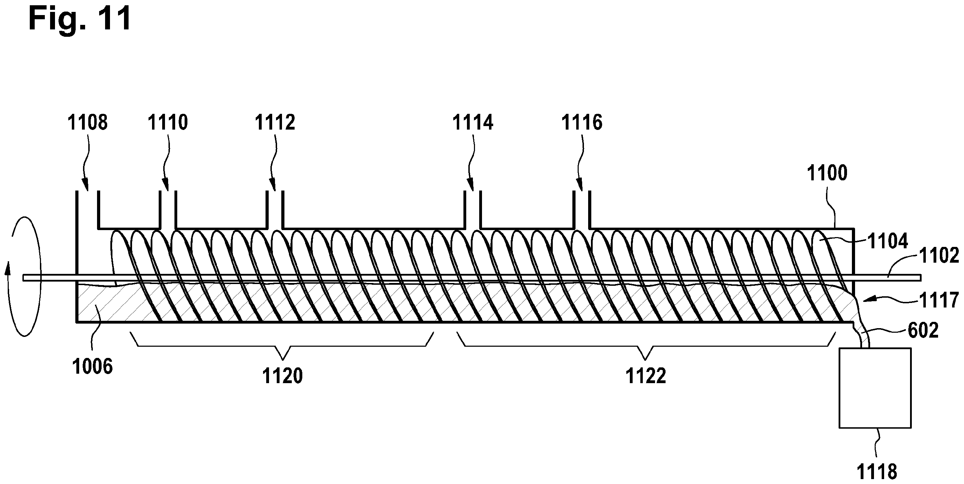

Fig. 11 illustrates an example of a flow reactor 1100. The example shown in Fig. 11 is illustrative and is not drawn to scale. The flow reactor 1100 comprises a rotatable shaft 1102 that is connected to a screw conveyor 1104. The screw conveyor 1104 is similar to an Archimedes screw, which is mounted horizontally. The flow reactor 1100 can be shown as being filled with granulate 1006. The granulate 1006 comprises grains or particles 100 such as is shown in Figs. 1-4. As the rotatable shaft 1102 is turned, it causes the granulate 1006 to move through the flow reactor 1100. It also causes the granulate 1006 to be mixed. At an entrance there is an inlet 1108 for adding granulate 1006. This may be done on a continual basis as the shaft 1102 is rotated. This causes the granulate to go to a first inlet for at least one pigment and fluid binding agent. At this first inlet 1110 the at least one pigment and the fluid binding agent are added to the granulate 1006 and become mixed with it as the shaft 1102 is rotated. When they are thoroughly mixed, the granulate 1006 and the at least one pigment and the fluid binding agent form an initial composition 1120. This initial composition 1120 is then transported beneath a first inlet for water and catalyst 1112. The water and catalyst may be added on a continual or intermittent basis at this inlet 1112.

As the initial composition 1120 is transported further along the flow reactor 1100 fluid binding agent and at least one pigment cure into the initial coating 200 such as depicted in Fig. 2. After the initial coating 200 is formed, the initial composition 1120 is transported underneath the second inlet for at least one pigment and fluid binding agent. At this point more of the pigment and fluid binding agent are added and the initial composition 1120 becomes the subsequent composition 1122. The pigments used for the initial composition and the subsequent composition may be identical or they may be different.

The subsequent composition 1122 is mixed and transported underneath the second inlet for water and catalyst 1116. The water and catalyst are then mixed with the subsequent composition 1122 and over time are further transported to the end of the flow reactor 1100. By the time the subsequent composition 1122 has reached the end of the flow reactor 1100 the subsequent coating 300 has formed on the grains or particles of the granulate 1006 such as depicted in Fig. 3. At the very end, then the granulate 1006 exits the flow reactor 1100 at an outlet 1117. The granulate 1006 at this point is then artificial turf infill 602. The artificial turf infill 602 is then shown as entering into an optional dryer 1118.

It is clear from Fig. 11 that the flow reactor may also be extended. For example if it is desired to put a third or fourth or even more coatings, the number of inlets in the flow reactor 1100 can simply be increased. This may involve moving the granulate at a different rotational rate or possibly even making the flow reactor 1100 longer.

### List of reference numerals

- 100: grain or granule
- 200: initial coating
- 202: gap
- 300: subsequent coating
- 400: further coating
- 500: artificial turf carpet
- 502: backing
- 504: artificial turf fiber tufts
- 506: row spacing
- 508: pile height
- 510: ground or floor
- 600: artificial turf
- 602: artificial turf infill
- 700: providing an initial composition comprising a granulate
- 702: mixing the initial composition
- 704: adding water and a catalyst to the initial composition during the mixing of the initial composition to cure the fluid binding agent and the at least one first type of pigment into an initial coating of the granulate
- 706: providing a subsequent composition comprising the granulate with the initial coating
- 708: mixing the subsequent composition
- 710: adding water and the catalyst to the subsequent composition during the mixing of the subsequent composition to cure the fluid binding agent and the at least one second type of pigment into a subsequent coating of the granulate
- 712: providing the granulate with the subsequent coating as artificial turf infill
- 800: providing a subsequent composition by adding at least one additive and the fluid binding agent to the granulate
- 802: mixing the subsequent composition
- 804: adding water and the catalyst to the subsequent composition during the mixing of the subsequent composition to cure the fluid binding agent and the at least one additive into a further coating
- 900: installing an artificial turf carpet with multiple artificial turf fiber tufts
- 902: providing the artificial turf by spreading a layer of artificial turf infill between the multiple artificial turf fiber tufts
- 1000: mixing vat
- 1002: rotatable shaft
- 1004: mixing paddles
- 1006: granulate
- 1100: flow reactor
- 1102: rotatable shaft
- 1104: screw conveyor
- 1108: inlet for granulate
- 1110: first inlet for at least one pigment and fluid binding agent
- 1112: first inlet for water and catalyst
- 1114: second inlet for at least one pigment and fluid binding agent
- 1116: first inlet for water and catalyst
- 1117: outlet
- 1118: dryer
- 1120: initial composition
- 1122: subsequent composition

## Claims

1. A method manufacturing artificial turf infill (602), wherein the method comprises:
- providing (700) an initial composition (1120) comprising a granulate (1006), at least one first type of pigment, and a fluid binding agent, wherein the fluid binding agent comprises at least one type of polymer component;
- mixing (702) the initial composition;
- adding (704) water and a catalyst to the initial composition during the mixing of the initial composition to cure the fluid binding agent and the at least one type of pigment into an initial coating (200) of the granulate;
- providing (706) a subsequent composition (1122) comprising the granulate with the initial coating, at least one second type of pigment, and the fluid binding agent;
- mixing (708) the subsequent composition;
- adding (710) water and the catalyst to the subsequent composition during the mixing of the subsequent composition to cure the fluid binding agent and the at least one type of pigment into a subsequent coating (300) of the granulate, wherein the initial coating comprises gaps (202), wherein the subsequent coating comprises gaps (202); and
- providing (712) the granulate with the subsequent coating as artificial turf infill.

2. The method of claim 1, wherein the granulate with the initial coating and the subsequent coating is re-coated at least one time by performing the following sequence:
- providing (800) a subsequent composition by adding at least one additive and the fluid binding agent to the granulate;
- mixing (802) the subsequent composition; and
- adding (804) water and the catalyst to the subsequent composition during the mixing of the subsequent composition to cure the fluid binding agent and the at least one additive into a further coating (400), wherein the granulate with the further coating is provided as the artificial turf infill.

3. The method of claim 2, wherein the at least one additive further comprises any one of the following: the at least one first type of pigment, the at least one second type of pigment, a flame retardant, aluminum trihydrate, magnesium hydroxide, an intumescent component, ammonium polyphosphate, exfoliated graphite, methylcellulose, zeolite, an antibacterial agent, silver, chitosan, an IR reflective pigment, a hindered amine light stabilizer, an anti-freeze additive, a deicing additive, sodium chloride, potassium chloride, sodium formiate, potassium formiate, and combinations thereof.

4. The method of any one of the preceding claims, wherein the granulate comprises an elastomeric granulate.

5. The method of any one of the preceding claims, wherein the granulate comprises any one of the following: rubber, an elastomeric polymer, Metallocene Butadiene Rubber, nitrile rubber granulate, natural rubber granulate, styrene-butadiene rubber granulate, ethylene propylene diene monomer rubber granulate, black crumb rubber granulate, acrylonitrile butadiene rubber, a thermoplastic polymer, Styrene Ethylene Butylene Styrene , Styrene Block Copolymers, an elastic foam, elastic polyurethane foam, and combinations thereof.

6. The method of any one of claims 1 through 3, wherein the granulate comprises a compression resilient granulate.

7. The method of any one of claims, 1, 2, 3, or 6, wherein the granulate is any one of the following: natural latex, cork, linoleum, a composite formed from one or more type of solidified vegetable oil and wood flour, a hydrogel of methyl-cellulose, and combinations thereof.

8. The method of any one of the preceding claims, wherein the granulate has an average diameter between 0.1 mm and 3.0 mm and/or wherein the granulate has a maximum diameter less than 5.0 mm.

9. The method of any one of the preceding claims, wherein the at least one first type of pigment and/or the at least one second type of pigment comprises any one of the following: an inorganic pigment, an organic pigment, iron oxide, thalo green, Chromium(III) oxide, a Copper phythalocyanie pigment, a nickel azopigment, titanium oxide, and combinations thereof.

10. The method of any one of the preceding claims, wherein the polymer component comprises any one of the following: at least one type of monomer, at least one type of partially polymerized polymer, and combinations thereof.

11. The method of any one of the preceding claims, wherein the polymer component is cured into at least one type of polyurethane by the water and catalyst.

12. The method of any one of the preceding claims, wherein the fluid binding agent comprises a liquid polyurethane component.

13. The method of claim 12, wherein the liquid polyurethane component comprises an NCO terminal polymer, which may comprise a pre-polymer, a polymeric isocyanate, an oligomeric isocyanate, a monomer, and a mixture thereof.

14. The method of claim 12 or 13, wherein the liquid polyurethane component comprises an aromatic diisocyanate of the group of toluene diisocyanate and/or methylene- 2,2 -diisocyanate.

15. The method of claim 12, 13, or 14, wherein the liquid polyurethane component comprises an aliphatic diisocyanate of the group hexamethylene disiocyanate, isophorone diisocyanate, and/or 1,4-cyclohexyldisiocyanate.

16. The method of any one of claims 12 through 15, wherein the liquid polyurethane component comprises an methylenediphenyl-isocyanate isomer mixture.

17. The method of any one of claims 12 through 16, wherein the liquid polyurethane component comprises a hydroxyl component, wherein the hydroxyl component is selected from the group of polyether polyol or polyester polyol.

18. The method of claim 17, wherein the hydroxyl component is based on a polyetherpolyol with a molecular weight between 500 and 10000, preferably the molecular weight is between 1500 and 6000, and more preferably the molecular weight is between 2000 and 4000.

19. The method of any one of the preceding claims, wherein the catalyst belongs to any one of the following groups: a secondary amine catalyst, a tertiary amine catalyst, and a metal organic catalyst.

20. The method of any one of the preceding claims, wherein the method further comprises drying the subsequent composition before providing the granulate as the artificial turf infill.

21. The method of any one of the preceding claims, wherein the method is at least partially performed in a flow reactor (1100).

22. The method of any one of claims 1 through 9, wherein the method is at least partially performed as a batch process (1000), wherein the initial coating is formed on the granulate during an initial batch, and wherein the subsequent coating is formed on the granulate during a subsequent batch.

23. The method of any one of the preceding claims, wherein any one of the following:
- the at least one first type of pigment is identical with the at least one second type of pigment, and
- the at least one first type of pigment is a different color from the at least one second type of pigment.

24. The method of any one of the preceding claims, wherein the initial coating and the subsequent coating each have a thickness of less than any one of the following: 0.1 mm, 0.075 mm, 0.05 mm, and 0.01 mm.

25. A method of manufacturing artificial turf (600), wherein the method comprises:
- installing (900) an artificial turf carpet (500), wherein the artificial turf carpet comprises multiple artificial turf fiber tufts (504); and
- providing (902) the artificial turf by spreading a layer of artificial turf infill (602) between the multiple artificial turf fiber tufts, wherein the artificial turf infill comprises granulate, wherein the granulate comprises at least two outer coatings (200, 300, 400), wherein one of the at least two outer coatings comprises at least one first type of pigment and a binding agent, wherein the other of the at least two outer coatings comprises at least one second type of pigment and the binding agent, wherein the binding agent comprises at least one type of polyurethane polymer, and wherein the at least two outer coatings each comprise gaps (202) .

26. Artificial turf infill (602), wherein the artificial turf infill comprises granulate, wherein the granulate comprises at least two outer coatings (200, 300, 400), wherein one of the at least two outer coatings comprises at least one first type of pigment and a binding agent, wherein the other of the at least two outer coatings comprises at least one second type of pigment and the binding agent, wherein the binding agent comprises at least one type of polyurethane polymer, wherein the at least two outer coatings each comprise gaps (202).

27. An artificial turf (600), wherein the artificial turf comprises:
- an artificial turf carpet (500), wherein the artificial turf carpet comprises multiple artificial turf fiber tufts (504); and
- artificial turf infill (602) spread between the multiple artificial fiber tufts, wherein the artificial turf infill comprises a granulate (602), wherein the granulate comprises at least two outer coatings (200, 300, 400), wherein one of the at least two outer coatings comprises at least one first type of pigment and a binding agent, wherein the other of the at least two outer coatings comprises at least one second type of pigment and the binding agent, wherein the binding agent comprises at least one type of polyurethane polymer, and wherein the at least two outer coatings each comprise gaps (202).

## Patentansprüche

1. Verfahren zum Herstellen einer Kunstraseneinstreu (602), wobei das Verfahren umfasst:
- Bereitstellen (700) einer Ausgangszusammensetzung (1120), die ein Granulat (1006), mindestens eine erste Art von Pigment und ein Fluidbindemittel umfasst, wobei das Fluidbindemittel mindestens eine Art von Polymerkomponente umfasst;
- Durchmischen (702) der Ausgangszusammensetzung;
- Hinzufügen (704) von Wasser und einem Katalysator zu der Ausgangszusammensetzung während des Durchmischens der Ausgangszusammensetzung, um das Fluidbindemittel und die mindestens eine Art von Pigment zu einer Anfangsbeschichtung (200) des Granulats zu härten;
- Bereitstellen (706) einer Folgezusammensetzung (1122), die das Granulat mit der Anfangsbeschichtung, mindestens eine zweite Art von Pigment und das Fluidbindemittel umfasst;
- Durchmischen (708) der Folgezusammensetzung;
- Hinzufügen (710) von Wasser und dem Katalysator zu der Folgezusammensetzung während des Durchmischens der Ausgangszusammensetzung, um das Fluidbindemittel und die mindestens eine Art von Pigment zu einer Folgebeschichtung (300) des Granulats zu härten, wobei die Anfangsbeschichtung Lücken (202) umfasst, wobei die Folgebeschichtung Lücken (202) umfasst; und
- Bereitstellen (712) des Granulats mit der Folgebeschichtung als Kunstraseneinstreu.

2. Verfahren nach Anspruch 1, wobei das Granulat mit der Anfangsbeschichtung und der Folgebeschichtung mindestens einmal durch Durchführen der folgenden Schrittfolge erneut beschichtet wird:
- Bereitstellen (800) einer Folgezusammensetzung durch Hinzufügen mindestens eines Zusatzes und des Fluidbindemittels zu dem Granulat;
- Durchmischen (802) der Folgezusammensetzung; und
- Hinzufügen (804) von Wasser und dem Katalysator zu der Folgezusammensetzung während des Durchmischens der Folgezusammensetzung, um das Fluidbindemittel und die mindestens eine Art von Pigment zu einer weiteren Beschichtung (400) zu härten, wobei das Granulat mit der weiteren Beschichtung als Kunstraseneinstreu bereitgestellt wird.

3. Verfahren nach Anspruch 2, wobei der mindestens eine Zusatz ferner irgendeine der folgenden Substanzen umfasst: die mindestens eine erste Art von Pigment, die mindestens eine zweite Art von Pigment, einen Flammverzögerer, Aluminiumtrihydrat, Magnesiumhydroxid, eine intumeszierende Komponente, Ammoniumpolyphosphat, Blähgraphit, Methylcellulose, Zeolith, einen antibakteriellen Wirkstoff, Silber, Chitosan, ein IR-reflektierendes Pigment, einen Lichtstabilisator auf Basis von gehindertem Amin, einen Frostschutzzusatz, einen Enteisungszusatz, Natriumchlorid, Kaliumchlorid, Natriumformiat, Kaliumformiat und Kombination davon.

4. Verfahren nach einem der vorangehenden Ansprüche, wobei das Granulat ein elastomeres Granulat umfasst.

5. Verfahren nach einem der vorangehenden Ansprüche, wobei das Granulat irgendeine der folgenden Substanzen umfasst: Gummi, ein elastomeres Polymer, Metallocen-Butadien-Gummi, Nitrilgummigranulat, Naturgummigranulat, Styrol-Butadien-Gummigranulat, Ethylen-Propylen-Dien-Monomer-Gummigranulat, schwarzes Gummikrümelgranulat, Acrylnitrilbutadiengummi, ein thermoplastisches Polymer, Styrol-Ethylen-Butylen-Styrol, Styrol-Blockcopolymere, einen elastischen Schaumstoff, elastischen Polyurethanschaumstoff und Kombination davon.

6. Verfahren nach einem der Ansprüche 1 bis 3, wobei das Granulat ein kompressionsbeständiges Granulat umfasst.

7. Verfahren nach einem der Ansprüche 1, 2, 3 oder 6, wobei das Granulat irgendeines der folgenden ist: Naturlatex, Kork, Linoleum, ein Verbundstoff aus einer oder mehreren Arten von gehärtetem Pflanzenöl und Holzmehl, ein Hydrogel aus Methylcellulose und Kombination davon.

8. Verfahren nach einem der vorangehenden Ansprüche, wobei das Granulat einen durchschnittlichen Durchmesser zwischen 0,1 mm und 3,0 mm aufweist, und/oder wobei das Granulat eine größten Durchmesser von weniger als 5,0 mm aufweist.

9. Verfahren nach einem der vorangehenden Ansprüche, wobei die mindestens eine erste Art von Pigment und/oder die mindestens eine zweite Art von Pigment irgendeine der folgenden Substanzen umfasst/umfassen: ein anorganisches Pigment, ein organisches Pigment, Eisenoxid, Thalogrün, Chrom(III)-oxid, ein Kupferphthalocyaninpigment, ein Nickelazopigment, Titanoxid und Kombinationen davon.

10. Verfahren nach einem der vorangehenden Ansprüche, wobei die Polymerkomponente eine der folgenden Substanzen umfasst: mindestens eine Art von Monomer, mindestens eine Art von teilweise polymerisiertem Polymer und Kombinationen davon.

11. Verfahren nach einem der vorangehenden Ansprüche, wobei die Polymerkomponente durch das Wasser und den Katalysator zu mindestens einer Art von Polyurethan gehärtet wird.

12. Verfahren nach einem der vorangehenden Ansprüche, wobei das Fluidbindemittel eine flüssige Polyurethankomponente umfasst.

13. Verfahren nach Anspruch 12, wobei die flüssige Polyurethankomponente ein Polymer mit NCO-Endgruppen umfasst, das ein Prepolymer, ein polymeres Isocyanat, ein oligomeres Isocyanat, ein Monomer und eine Mischungen davon umfassen kann.

14. Verfahren nach Anspruch 12 oder 13, wobei die flüssige Polyurethankomponente ein aromatisches Diisocyanat der Gruppe aus Toluoldiisocyanat und/oder Methylen-2,2-diisocyanat umfasst.

15. Verfahren nach Anspruch 12, 13 oder 14, wobei die flüssige Polyurethankomponente ein aliphatisches Diisocyanat der Gruppe Hexamethylendiisocyanat, Isophorondiisocyanat und/oder 1,4-Cyclohexyldiisocyanat umfasst.

16. Verfahren nach einem der Ansprüche 12 bis 15, wobei die flüssige Polyurethankomponente eine Methylendiphenyl-Isocyanat-Isomermischung umfasst.

17. Verfahren nach einem der Ansprüche 12 bis 16, wobei die flüssige Polyurethankomponente eine Hydroxylkomponente umfasst, wobei die Hydroxylkomponente ausgewählt ist aus der Gruppe aus Polyetherpolyol oder Polyesterpolyol.

18. Verfahren nach Anspruch 17, wobei die Hydroxylkomponente auf einem Polyetherpolyol mit einem Molekulargewicht zwischen 500 und 10.000 basiert, wobei das Molekulargewicht vorzugsweise zwischen 1500 und 6000 liegt und wobei das Molekulargewicht stärker bevorzugt zwischen 2000 und 4000 liegt.

19. Verfahren nach einem der vorangehenden Ansprüche, wobei der Katalysator zu irgendeiner der folgenden Gruppen gehört: sekundärer Aminkatalysator, tertiärer Aminkatalysator und metallorganischer Katalysator.

20. Verfahren nach einem der vorangehenden Ansprüche, wobei das Verfahren ferner das Trocknen der Folgezusammensetzung vor der Bereitstellung des Granulats als Kunstraseneinstreu umfasst.

21. Verfahren nach einem der vorangehenden Ansprüche, wobei das Verfahren zumindest zum Teil in einem Strömungsreaktor (1100) durchgeführt wird.

22. Verfahren nach einem der Ansprüche 1 bis 9, wobei das Verfahren zumindest zum Teil als Batch-Prozess (1000) durchgeführt wird, wobei die Anfangsbeschichtung während eines Anfangs-Batch-Betriebs auf dem Granulat ausgebildet wird, und wobei die Folgebeschichtung während eines Folge-Batch-Betriebs auf dem Granulat ausgebildet wird.

23. Verfahren nach einem der vorangehenden Ansprüche, wobei mindestens eine der folgenden Aussagen zutrifft:
- die mindestens eine erste Art von Pigment ist identisch mit der mindestens einen zweiten Art von Pigment, und
- die mindestens eine erste Art von Pigment hat eine andere Farbe als die mindestens eine zweite Art von Pigment.

24. Verfahren nach einem der vorangehenden Ansprüche, wobei die Anfangsbeschichtung und die Folgebeschichtung jeweils eine Dicke von weniger als einem der folgenden Maße aufweist: 0,1 mm, 0,075 mm, 0,05 mm und 0,01 mm.

25. Verfahren zum Herstellen eines Kunstrasens (600), wobei das Verfahren umfasst:
- Verlegen (900) eines Kunstrasenteppichs (500), wobei der Kunstrasenteppich mehrere Kunstrasenfaserbüschel (504) umfasst, und
- Bereitstellen (902) des Kunstrasens durch Verteilen einer Schicht von Kunstraseneinstreu (602) zwischen den mehreren Kunstrasenfaserbüscheln, wobei die Kunstraseneinstreu Granulat umfasst, wobei das Granulat mindestens zwei äußere Beschichtungen (200, 300, 400) umfasst, wobei eine von den mindestens zwei äußeren Beschichtungen mindestens eine erste Art von Pigment und ein Bindemittel umfasst, wobei die andere von den mindestens zwei äußeren Beschichtungen mindestens eine zweite Art von Pigment und das Bindemittel umfasst, wobei das Bindemittel mindestens eine Art von Polyurethanpolymer umfasst und wobei die mindestens zwei äußeren Beschichtungen jeweils Lücken (202) umfassen.

26. Kunstraseneinstreu (602), wobei die Kunstraseneinstreu (602) Granulat umfasst, wobei das Granulat mindestens zwei äußere Beschichtungen (200, 300, 400) umfasst, wobei eine von den mindestens zwei äußeren Beschichtungen mindestens eine erste Art von Pigment und ein Bindemittel umfasst, wobei die andere von den mindestens zwei äußeren Beschichtungen mindestens eine zweite Art von Pigment und das Bindemittel umfasst, wobei das Bindemittel mindestens eine Art von Polyurethanpolymer umfasst, wobei die mindestens zwei äußeren Beschichtungen jeweils Lücken (202) umfassen.

27. Kunstrasen (600), wobei der Kunstrasen umfasst:
- einen Kunstrasenteppichs (500), wobei der Kunstrasenteppich mehrere Kunstrasenfaserbüschel (504) umfasst, und
- Kunstraseneinstreu (602), die zwischen den mehreren Kunstrasenfaserbüscheln verteilt ist, wobei die Kunstraseneinstreu ein Granulat umfasst, wobei das Granulat mindestens zwei äußere Beschichtungen (200, 300, 400) umfasst, wobei eine von den mindestens zwei äußeren Beschichtungen mindestens eine erste Art von Pigment und ein Bindemittel umfasst, wobei die andere von den mindestens zwei äußeren Beschichtungen mindestens eine zweite Art von Pigment und das Bindemittel umfasst, wobei das Bindemittel mindestens eine Art von Polyurethanpolymer umfasst und wobei die mindestens zwei äußeren Beschichtungen jeweils Lücken (202) umfassen.

## Revendications

1. Procédé de fabrication d'un remplissage de gazon artificiel (602), le procédé comprenant :
- la fourniture (700) d'une composition initiale (1120) comprenant des granulés (1006), au moins un premier type de pigment, et un liant fluidique, où le liant fluidique comprend au moins un type de composant polymère ;
- le mélange (702) de la composition initiale ;
- l'ajout (704) d'eau et d'un catalyseur à la composition initiale au cours du mélange de la composition initiale pour durcir le liant fluidique et l'au moins un type de pigment en un revêtement initial (200) des granulés,
- la fourniture (706) d'une composition subséquente (122) comprenant les granulés avec le revêtement initial, au moins un second type de pigment, et le liant fluidique ;
- le mélange (708) de la composition subséquente ;
- l'ajout (710) d'eau et du catalyseur à la composition subséquente au cours du mélange de la composition subséquente pour durcir le liant fluidique et l'au moins un type de pigment en un revêtement subséquent (300) des granulés,
où le revêtement initial comprend des interstices (202), où le revêtement subséquent comprend des interstices (202) ; et
- la mise à disposition (712) des granulés avec le revêtement subséquent en tant que remplissage de gazon artificiel.

2. Procédé selon la revendication 1, dans lequel les granulés avec le revêtement initial et le revêtement subséquent sont à nouveau revêtus au moins une fois en effectuant la séquence suivante :
- la fourniture (800) d'une composition subséquente par l'ajout d'au moins un additif et du liant fluidique aux granulés ;
- le mélange (802) de la composition subséquente ; et
- l'ajout (804) d'eau et du catalyseur à la composition subséquente au cours du mélange de la composition subséquente pour durcir le liant fluidique et l'au moins un additif en un nouveau revêtement (400), où les granulés avec le nouveau revêtement sont mis à disposition en tant que remplissage de gazon artificiel.

3. Procédé selon la revendication 2, dans lequel l'au moins un additif comprend en outre l'un quelconque des constituants suivants : l'au moins un premier type de pigment, l'au moins un second type de pigment, un retardateur de flamme, du trihydrate d'aluminium, de l'hydroxyde de magnésium, un composant intumescent, du polyphosphate d'ammonium, du graphite exfolié, de la méthylcellulose, une zéolite, un agent antibactérien, de l'argent, du chitosane, un pigment réfléchissant le rayonnement infrarouge IR, un photostabilisant à amine encombrée, un additif antigel, un additif de dégivrage, du chlorure de sodium, du chlorure de potassium, du formiate de sodium, du formiate de potassium et des combinaisons de ceux-ci.

4. Procédé selon l'une quelconque des revendications précédentes, dans lequel les granulés comprennent des granulés élastomères.

5. Procédé selon l'une quelconque des revendications précédentes, dans lequel les granulés comprennent l'un quelconque des constituants suivants : du caoutchouc, un polymère élastomère, un caoutchouc butadiène métallocène, des granulés de caoutchouc nitrile, des granulés de caoutchouc naturel, des granulés de caoutchouc butadiène styrène, des granulés de granulés de caoutchouc de monomère d'éthylène propylène diène, des granulés de caoutchouc noir granulaire, du caoutchouc acrylonitrile butadiène, un polymère thermoplastique, des copolymères blocs styrène éthylène butylène styrène, styrène, une mousse élastique, une mouse élastique polyuréthane, et des combinaisons de ceux-ci.

6. Procédé selon l'une quelconque des revendications 1 à 3, dans lequel les granulés comprennent des granulés élastiques en compression.

7. Procédé selon l'une quelconque des revendications 1, 2, 3 ou 6, dans lequel les granulés sont l'un quelconque des constituants suivants : du latex naturel, du liège, du linoléum, un composite formé à partir d'un ou de plusieurs types d'huile végétale solidifiée et de sciure de bois, d'un hydrogel de méthylcellulose et des combinaisons de ceux-ci.

8. Procédé selon l'une quelconque des revendications précédentes, dans lequel les granulés ont un diamètre moyen entre 0,1 mm et 3,0 mm et/ou dans lequel les granulés ont un diamètre inférieur à 5,0 mm.

9. Procédé selon l'une quelconque des revendications précédentes, dans lequel l'au moins un premier type de pigment et/ou l'au moins un second type de pigment comprend l'un quelconque des constituants : un pigment inorganique, un pigment organique, de l'oxyde de fer, du thalo vert, de l'oxyde de chrome (III), un pigment de phtalocyanine de cuivre, un pigment azoïque de nickel, de l'oxyde de titane et des combinaisons de ceux-ci.

10. Procédé selon l'une quelconque des revendications précédentes, dans lequel le composant de polymère comprend l'un quelconque des constituants suivants : au moins un type de monomère, au moins un type de polymère partiellement polymérisé et des combinaisons de ceux-ci.

11. Procédé selon l'une quelconque des revendications précédentes, dans lequel le composant de polymère est durci en au moins un type de polyuréthane par l'eau et le catalyseur.

12. Procédé selon l'une quelconque des revendications précédentes, dans lequel le liant fluidique comprend un composant de polyuréthane liquide.

13. Procédé selon la revendication 12, dans lequel le composant de polyuréthane liquide comprend un polymère à terminaison NCO, qui peut comprendre un prépolymère, un isocyanate polymère, un isocyanate oligomère, un monomère, et un mélange de ceux-ci.

14. Procédé selon la revendication 12 ou la revendication 13, dans lequel le composant de polyuréthane liquide comprend un diisocyanate aromatique du groupe du diisocyanate de toluène et/ou du méthylène-2,2- diisocyanate.

15. Procédé selon la revendication 12, 13 ou 14, dans lequel le composant de polyuréthane liquide comprend un diisocyanate aliphatique du groupe du diisocyanate d'hexaméthylène, du diisocyanate d'isophorone et/ou du 1, 4-cyclohexyldiisocyanate.

16. Procédé selon l'une quelconque des revendications 12 à 15, dans lequel le composant de polyuréthane liquide comprend un mélange d'isomères de l'isocyanate de méthylène diphényle.

17. Procédé selon l'une quelconque des revendications 12 à 16, dans lequel le composant de polyuréthane liquide comprend un composant hydroxylé, où le composant hydroxylé est choisi dans le groupe des polyéthers polyols ou des polyesters polyols.

18. Procédé selon la revendication 17, dans lequel le composant hydroxylé est basé sur un polyéther polyol avec un poids moléculaire entre 500 et 10000, de préférence le poids moléculaire se situe entre 1500 et 6000, et plus préférentiellement le poids moléculaire se situe entre 2000 et 4000.

19. Procédé selon l'une quelconque des revendications précédentes, dans lequel le catalyseur appartient à l'un quelconque des groupes suivants : un catalyseur d'amine secondaire, un catalyseur d'amine tertiaire et un catalyseur organométallique.

20. Procédé selon l'une quelconque des revendications précédentes, dans lequel le procédé comprend en outre le séchage de la composition subséquente avant la mise à disposition des granulés en tant que remplissage de gazon artificiel.

21. Procédé selon l'une quelconque des revendications précédentes, dans lequel le procédé est au moins partiellement réalisé dans un réacteur à flux continu (1100).

22. Procédé selon l'une quelconque des revendications 1 à 9, dans lequel le procédé est au moins partiellement réalisé en tant que procédé par lots (1000), dans lequel le revêtement initial est formé sur les granulés au cours d'un lot initial, et dans lequel le revêtement subséquent est formé sur les granulés au cours d'un lot subséquent.

23. Procédé selon l'une quelconque des revendications précédentes, dans lequel se produit l'un quelconque des faits suivants :
- l'au moins un premier type de pigment est identique à l'au moins un second type de pigment, et
- l'au moins un premier type de pigment est d'une couleur différente de l'au moins un second type de pigment.

24. Procédé selon l'une quelconque des revendications précédentes, dans lequel le revêtement initial et le revêtement subséquent ont chacun une épaisseur inférieure à l'une quelconque des épaisseurs suivantes : 0,1 mm, 0,075 mm, 0,05 mm et 0,01 mm.

25. Procédé de fabrication d'un gazon artificiel (600), où le procédé comprend :
- l'installation (900) d'un tapis de gazon artificiel (500), où le tapis de gazon artificiel comprend de multiples touffes de fibres de gazon artificiel (504) ; et
- la fourniture (902) du gazon artificiel en étalant une couche de remplissage de gazon artificiel (602) entre les multiples touffes de fibres de gazon artificiel, où le remplissage de gazon artificiel comprend les granulés, où les granulés comprennent au moins deux revêtements extérieurs (200, 300, 400), où l'un des au moins deux revêtements extérieurs comprend au moins un premier type de pigment et un liant, où l'autre des au moins deux revêtements extérieurs comprend au moins un second type de pigment et le liant, où le liant comprend au moins un type de polymère polyuréthane, et où les au moins deux revêtements extérieurs comprennent chacun des interstices (202).

26. Remplissage de gazon artificiel (602), où le remplissage de gazon artificiel comprend des granulés, où les granulés comprennent au moins deux revêtements extérieurs (200, 300, 400), où l'un parmi les au moins deux revêtements extérieurs comprend au moins un premier type de pigment et un liant, où l'autre parmi les au moins deux revêtements extérieurs comprend au moins un second type de pigment et le liant, où le liant comprend au moins un type de polymère polyuréthane, où les au moins deux revêtements extérieurs comprennent chacun des interstices (202).

27. Gazon artificiel (600), où le gazon artificiel comprend :
- un tapis de gazon artificiel (500), où le tapis de gazon artificiel comprend de multiples touffes de fibres de gazon artificiel (504) ; et
- un remplissage de gazon artificiel (602) étalé entre les multiples touffes de fibres artificielles, où le remplissage de gazon artificiel (602) comprend des granulés, où les granulés comprennent au moins deux revêtements extérieurs (200, 300, 400), où l'un parmi les au moins deux revêtements extérieurs comprend au moins un premier type de pigment et un liant, où l'autre parmi les au moins deux revêtements extérieurs comprend au moins un second type de pigment et le liant, où le liant comprend au moins un type de polymère polyuréthane, et où les au moins deux revêtements extérieurs comprennent chacun des interstices (202).
